# EUROPEAN PATENT APPLICATION

(11) **EP 3 257 490 A1**
(43) Date of publication of application: **20.12.2017**
(21) Application number: 16175043.5
(22) Date of filing: 17.06.2016
(51) Int. Cl.: A61G 5/10, A61G 5/12

(54) **SIDE SUPPORT FOR A POSTURAL SUPPORT SEAT**

(71) Applicant: Sunrise Medical GmbH, 69254 Malsch/Heidelberg (DE)
(72) Inventor: Davies, David, Telford, Shropshire TF2 9NQ (GB)
(74) Representative: Euler, Matthias

(57) **Abstract**

The invention relates to a side support for a postural support seat, comprising at least one support element for exerting a force on a user sitting in the postural support seat; at least a first hinge element and at least a second hinge element forming a joint-link chain, wherein the support element is attached to a first end of the joint-link-chain; and at least one attachment element, wherein a second end of the joint-link-chain, being opposite to the first end is connected to the attachment element, and wherein the attachment element is adapted to be connected to the postural support seat.

## Description

The present invention relates to a side support for a postural support seat. The present invention also relates to a postural support seat having at least one side support installed.

Postural support seating is a term often used to refer to pediatric seating which comprises a wide variety of positioning and supportive furniture for infants, children, and adolescents with special needs. However, this kind of furniture can be also used for adults that may have special seating requirements. Postural support seats are known in form of wheelchairs, therapy chairs, positioning strollers, car seating systems, etc. Depending on the type and degree of impairment of the person using the seat, the seating requirements can be very complex.

The prior art teaches various postural support seats having support elements attached at various positions at the postural support seat. In particular, pelvic and lateral supports such as hip and thigh guides have been proven to be of great importance for providing stability. The support elements are normally mounted to the seat/back section of the seat with bent metal brackets. These brackets are normally adjustable in only one axis, sometimes in even two axis. The brackets can have some 'play' built into them to allow a small amount of angular adjustment. Normally, the brackets are fixed in a set depth position of the seat/back section, and are mounted in slots to allow depth adjustment. When the elements are set at their widest position, the metal brackets usually stick out to the side.

For example, EP 1 374 819 A1 describes a seating arrangement with both lateral and pelvic supports being moveable in two axis.

The pelvic and lateral support elements that are known in the prior art, however, have a limited range that does not allow a high degree of positioning. Also the side supports take up considerable space on the seat/back section of the seat.

Therefore, there is need for improved side supports that can be used on a postural support seat as lateral and/or pelvic side supports, that are more adjustable, and that take up less space.

This need is achieved according to the invention by a side support for a postural support seat, comprising at least one support element for exerting a force on a user sitting in the postural support seat; at least a first hinge element and at least a second hinge element forming a joint-link chain, wherein the support element is attached to a first end of the joint-link-chain; and at least one attachment element, wherein a second end of the joint-link-chain, being opposite to the first end is connected to the attachment element, and wherein the attachment element is adapted to be connected to the postural support seat.

Furthermore it is proposed that the second hinge element is connected to the support element and/or the first hinge element is connected to the attachment element, the first hinge element and/or the second hinge element comprise(s) an essentially elongated shape, and comprise(s) at least two attachment points at opposite ends and/or the support element is at least partly formed and/or comprised by the second hinge element and/or the attachment element is at least partly formed and/or comprised by the first hinge element.

With the invention it is furthermore proposed that the side support comprises at least one locking pin, and wherein the attachment points comprise at least one through hole each, suitable for inserting the locking pin for coupling two neighboring first and/or second hinge elements to each other for forming the joint-link chain, wherein the two neighboring first and/or second hinge elements are being at least in part rotational about the locking pin.

A side support according to the invention may be furthermore characterized in that the through holes are located in respective recesses in the surface of the first hinge element and/or second hinge element so that two neighboring first and/or second hinge elements are aligned with each other, preferably wherein the recesses are located on the same side of the first and/or second hinge elements, or on opposite sides of the first and/or second hinge elements.

Further advantageous embodiments of the invention can be characterized in that the locking pin and the through holes are adapted to form a friction joint, wherein preferably the outside of the locking pin and the inside of the through holes each comprise threads.

With the invention it is furthermore proposed that at least one castellation element is arranged around each through hole at a location where two neighboring first and/or second hinge elements are contacting each other, wherein preferably the castellation element of the first or second hinge element is adapted to interact with a castellation element of the neighboring first and/or second hinge element, and wherein especially the locking pin is kept biased by spring means for keeping the castellation elements in engagement, preferably wherein the two neighboring first and/or second hinge elements are adapted so that pulling the two neighboring first and/or second hinge elements away from each other disengages the engagement between the hinge elements.

A side support according the invention maybe further characterized by at least one serration element is arranged around each through hole at a location where two neighboring first and/or second hinge elements are contacting each other, wherein preferably the serration element of the first or second hinge element is adapted to interact with the serration element of the neighboring first and/or second hinge element, and wherein especially the locking pin comprises a thumb screw for keeping the serration elements of the hinge elements in engagement.

Further advantageous embodiments of the invention can be characterized in that the support element comprises at least one connection element for attaching the support element to the first end of the joint-link-chain, especially the second hinge element, wherein preferably the connection element comprises a hinge coupling for rotationally attaching the support element to the second hinge element in the joint-link-chain, wherein especially the hinge coupling is adapted to allow vertical and/or horizontal rotation of the support element relative to the joint-link-chain.

A support element according the invention may be characterized in that the attachment element is essentially elongated, especially comprises at least one continuous groove running in its longitudinal direction, preferably the attachment element comprises two continuous grooves on opposite sides of the attachment element, for installing the attachment element in a rail section that is arranged on a side of a seat section and/or back section of the postural support seat, preferably the attachment element is adapted to be slidably installed in the rail section.

However, a support element according the invention may be also characterized in that the attachment element is essentially elongated, especially comprises at least one bracket with at least one continuous protrusion running in its longitudinal direction, preferably the attachment element comprises two continuous protrusions on opposite sides of the attachment element, for installing the attachment element in the rail section that is arranged on the side of the seat section and/or back section of the postural support seat, preferably the attachment element is adapted to be slidably installed in the rail section.

A side support according the invention can be further characterized in that the support element comprises at least one pad for contacting the user's body.

Further, a side support according the invention can be further characterized in that the joint-link chain is comprised of at least a third hinge element located between two first and/or second hinge elements, preferably a plurality of third hinge elements.

Also, a side support according to the invention can be further characterized in that the first hinge element, the second hinge element and/or the third hinge element comprise(s) at least partly at least one plastic material, and/or at least one cast aluminum material.

Furthermore the invention provides a postural support seat, comprising at least one rail section arranged along the seat section and/or the back section, and at least one side support according to the invention, wherein especially the side support is installed in the rail section.

In one embodiment the postural support seat is characterized in that first and second rail sections are arranged along the side of the seat section, wherein preferably at least two side supports are installed as pelvic supports in each of the first and second rail sections; and/or third and fourth rail sections are arranged along the side of the back section, wherein especially at least one side support is installed as lateral support in each of the third and fourth rail sections.

Thus the invention is based on the surprising finding that by providing hinge elements forming a joint-link chain for holding a support element, it is possible to provide more accurate support for a user sitting in a postural support seat where the support element is mounted to. Also, because the joint-link-chain is comprised of individual hinge elements, the side support is more adjustable and takes up less space. In particular, the side supports do not stick outside of the seat envelope. Also, by using a side support according to the invention, space on the seat section is freed up for other things, like support cushions or control elements which is important when used on small pediatric seats. Therefore, the side supports are especially suitable for use on pediatric seats. Installing the side support in a rail section that is arranged on a side of a seat section and/or back section of the postural support seat, allows the side support to be positioned in three axis (height, width, and depth).

Also, advantageously, the number and orientation of the hinge elements can be varied as required so more adjustment range is possible than with the solutions that are known from the prior art.

In case castellation elements are used around each through hole of the hinge elements together with a spring biased locking pin for keeping the castellation elements of two neighboring hinge elements in engagement, the two hinge elements can be pulled away from each other to disengage the castellations. This advantageously allows the hinge elements to be unlocked for rotating the two hinge elements relative to each other to a new position, where the two hinge elements can be re-engaged again. This avoids the need for tools and allows quick adjustment. Also, one of the hinge elements at the attachment element can be disengaged so that the support element can be swung away from the user to allow them to be transferred out of the seat. In contrast to swing away laterals, that are already known in the prior art, the above solution requires no additional parts to achieve this function.

When serration elements are located around each through hole of the hinge elements, and are used especially together with a thumb screw as locking pin for keeping the castellation elements of the two neighboring hinge elements in engagement, a 'non-slip' engagement between two neighboring hinge elements can be achieved with much lower fastener torque. Also, using a thumb screw as locking pin makes the use of specialized tools for fastening two neighboring hinge elements together obsolete.

Further advantages and features of the invention are presented in the following description in which a preferred embodiment of the invention is shown by the help of the enclosed figures, in which
- Figure 1a, 1b, 1c: is a side view, a perspective view, and a front view of a postural support seat, having prior art side supports mounted thereon;
- Figure 2: is a perspective view of a postural support seat, having side supports according to various embodiments of the invention mounted thereon;
- Figure 3: is a perspective view of a side support according to a first embodiment of the invention, where arrows indicate the various degrees of freedom of the side support;
- Figure 4: is a perspective view of a side support according to a second embodiment of the invention;
- Figure 5: is a perspective view of another side support according to a first embodiment of the invention;
- Figure 6a, 6b, 6c: is a side view of one hinge element comprising castellation elements, and cross-sectional views of two neighboring hinge elements in engagement according to one embodiment of the invention;
- Figure 7a and 7b: is a perspective view of a hinge element, and a perspective view of a thumb screw according to another embodiment of the invention; and
- Figure 8: is a perspective view of castellation elements and/or serration elements according to one embodiment of the invention.

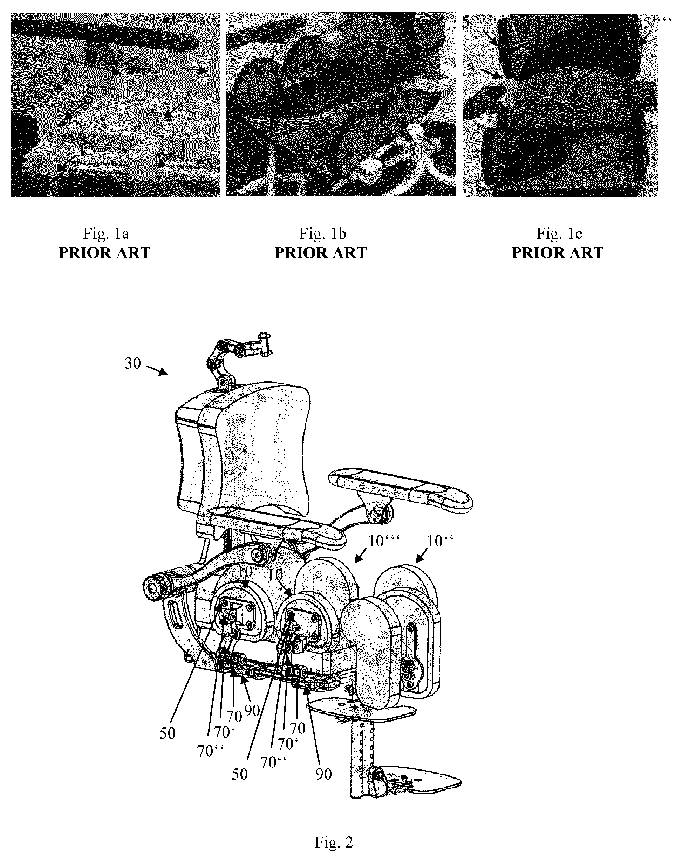

Figures 1a, 1b, 1c show a side view, a perspective view, and a front view of a postural support seat 3, having prior art side supports 1, 1', 1", 1"' mounted thereon. The figures show that the support elements 5, 5', 5 ", 5"' are fixed to bent sheet metal brackets. In the prior art example that is shown in the figures 1a, 1b, 1c, the brackets are adjustable in one axis only. The brackets could have some 'play' built into them to allow a small amount of angular adjustment which is however not intended and its degree is depending on the amount of projection out of receiving orifice. As shown in the figures 1a, 1b, 1c, the brackets are fixed in a set depth position on the seat, and mounted into slots and/or orifice to allow depth adjustment. In the shown prior art example, support elements 5, 5', 5 ", 5"' are mounted on the seat section as pelvic supports, while support elements 5"", 5""' are mounted on the back section as lateral supports. Also, it can be seen from the figures that the metal brackets stick out to the side of the postural support seat 3.

Figure 2 shows a perspective view of a postural support seat 30 having side supports 10, 10', 10", 10"' mounted thereon. The side supports 10, 10', 10", 10"' each comprise a support element 50, 50', 50", 50'" for exerting a force on a person sitting in the postural support seat 30. In the example that is shown in figure 2, four side supports 10, 10', 10", 10"', i.e. two on each side, are mounted on opposite sides of the seat section of the postural support seat 30 for pelvic support. The skilled person knows that more or less than two side supports 10 , 10' could be mounted on each side. Also, the skilled person knows that additional side supports (not shown) could be mounted on the back section of the postural support seat 30 to provide lateral support. Also, the side supports 10, 10', 10", 10"' are not limited to be used as pelvic and/or lateral support such as it is shown in figure 2. The skilled person would know that the side supports 10, 10', 10", 10"' can be also used to support thighs and knees as well as to hold up the leg in the vertical and/or horizontal plane. The side supports 10, 10', 10", 10"' could be also used as so-called "Stump-Pads" for supporting broken legs and for supporting the remainder of legs following amputation.

From figure 2 it can be also seen that three hinge elements in form of a first hinge element 70, a second hinge element 70', and a third hinge element 70" on each one of the side supports 10, 10' form a joint-link chain, where the support elements 50, 50' are attached to a first end of the joint-link-chain. Also, figure 2 shows an attachment element 90 on each one of the side supports 10, 10', where a second end of the joint-link-chain, that is opposite to the first end is connected to. The attachment element 90 can be installed in a rail section that is arranged on the side of the seat section.

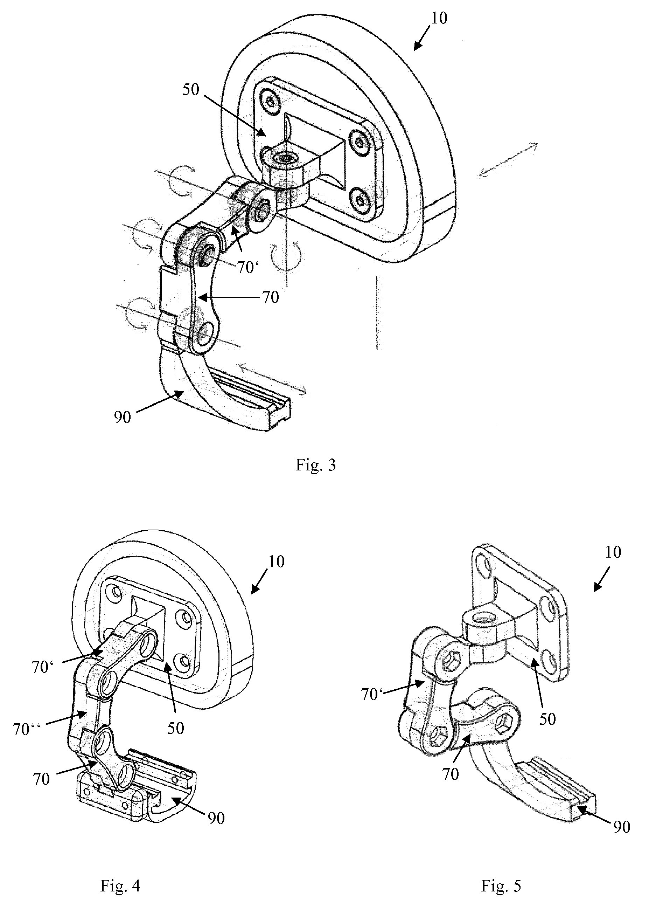

Figure 3 shows a perspective view of a side support 10 according to one embodiment of the invention. In figure 3 arrows are used to show the side supports 10 ability to rotate and/or to move around the first hinge element 70 and second hinge element 70', the attachment element 90, and/or the support element 50.

As it can be seen from the figure 3, the support element 50 comprises a connection element for attaching the support element 50 to the first end of the joint-link-chain, i.e. the second hinge element 70'. The connection element comprises a hinge coupling for rotationally attaching the support element 50 to the second hinge element 70' in the joint-link-chain. In the shown embodiment, the hinge coupling allows horizontal rotation of up to approximately 90° of the support element 50 relative to the joint-link-chain. However, the skilled person would know that an alternative coupling could be used that allows horizontal and vertical rotation, such as for example a ball joint coupling.

Also, in figure 3 it is shown that two neighboring hinge elements in form of the first hinge element 70 and the second hinge element 70' are coupled to each other to form the joint-link chain. As indicated by the arrows, the two neighboring hinge elements 70, 70' are each rotatable about an pivotal point. The attachment element 90 that is shown in figure 3 is essentially elongated and comprises two continuous grooves on opposite sides running in its longitudinal direction for installing the attachment element 90 in a rail section (not shown) that is arranged on a side of a seat section and/or back section of the postural support seat (not shown). Further attachment element 90 is connected to the first hinge element 70.

In preferred embodiments the support element 50 is at least partly formed by one hinge element, especially the second hinge element 70' and/or the attachment element is at least partly formed by one hinge element, especially the first hinge element. This reduces the number of parts and in case the support element 50 and/or the attachment element 90 comprise at least one internal joint, no loss of degree of freedom will result.

Figure 4 is a perspective view of a side support 10 according to a second embodiment of the invention. Similar to the first embodiment, as described above, the side support 10 comprise a support element 30 for exerting a force on a person sitting in the postural support seat where it is attached to (not shown). It can be seen that the side support comprises beside the first hinge element 70, and the second hinge element 70', at least one third hinge element 70" forming the joint-link chain. The number of third hinge elements 70", especially located mechanically between the first hinge element 70 and the second hinge element 70' is not restricted to a single third hinge element. A plurality of third hinge elements 70" connected mechanically in series can be used to increase the degree of freedom. Also, figure 4 shows an attachment element 90. In contrast to the attachment element that is shown in the previous figure 3, the attachment element 90 comprises a bracket with two continuous protrusions on opposite sides running in its longitudinal direction for installing the attachment element 90 in a rail section that could be arranged on the side of the seat section and/or back section of the postural support seat (not shown). Figure 5 is a perspective view of another side support 10 according to the first embodiment of the invention. As already described above, in regard to figure 3, the attachment element 90 is essentially elongated. and comprises two continuous grooves on opposite sides running in its longitudinal direction.

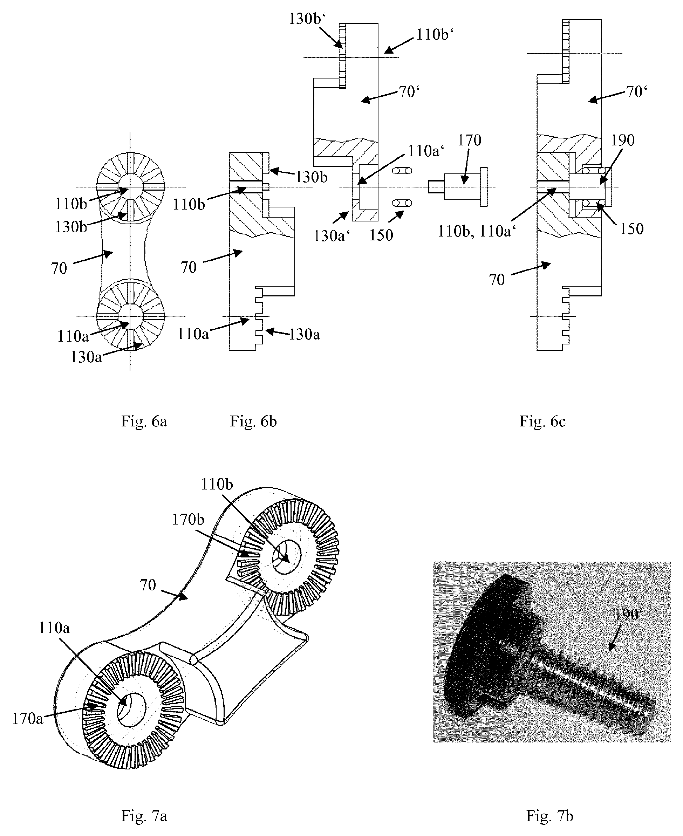

Figures 6a, 6b, 6c show a side view of one hinge element 70 comprising castellation elements 130a, 130b, and cross-sectional views of two neighboring hinge elements, namely first hinge element 70 and second hinge element 70' in engagement according to one embodiment of the invention.

In figure 6a the first hinge element 70 is shown, having castellation elements 130a, 130b arranged around each through-hole 110a, 110b. The skilled person would know that the term "castellation element" can be used to refer to a plurality of longitudinal bars that are diametrically arranged around each trough-hole 110a, 110b. Figure 6b shows a side view of the first hinge element 70 that is shown in figure 6a together with a second hinge element 70', preferably being essentially identical to the first hinge element 70 that is shown in figure 6a but being rotated around 180 degrees. From figure 6b it can be seen that castellation elements 130b, 130a' are located around each through hole 110b, 110a' of the hinge elements 70, 70', where the two neighboring hinge elements 70, 70' are contacting each other. The two castellation elements 130b, 130a' interact with each other when the assembly is fully mounted. Also, figure 6b shows a locking pin 190 that is mounted biased by spring means 150 and is made long enough to extend through the through holes 110b, 110a'.

In figure 6c, the two hinge elements 70, 70' of figure 6b are shown being held together by the locking pin 190. By pulling the two neighboring hinge elements 70, 70' away from each other, i.e. against the force of the spring means 150, the engagement between the two neighboring hinge elements 70, 70' can be disengaged, and the position of the hinge elements 70, 70' can be re-adjusted without having to use tools.

Figures 7a and 7b show a first hinge element 70, and a thumb screw 190', respectively according to another embodiment of the invention. The first hinge element 70 that is shown in figure 7a has serration elements 170a, 170b arranged around each through-hole 110a, 110b. The skilled person would know that the term "serration element" can be used to refer to a plurality of longitudinal gear teeth like elements that are diametrically arranged around each through-hole 110a, 110b. In case a second hinge element (not shown) is combined with the first hinge element 70, i.e. when the serration elements 170a, 170b of the joint surfaces are combined, a 'non-slip' engagement of the two hinge elements can be achieved with a very low fastener torque.

For fastening two hinge elements of the kind of hinge elements 70 as shown in figure 7a, a locking pin 190' in the form of a thumb screw can be used so that tools are not required for inserting and fastening the locking pin 190'. Preferably only one of the through holes 110a and 110b comprises an (internal) thread corresponding with the thread of locking pin 190' whereas the other though-hole has a diameter extending the diameter of the thread of locking pin 190'. When aligning a through-hole having a thread of a hinge element and a through-hole, having no thread of another hinge element so that the another hinge element is located between the head of the locking pin 190' and the though-hole having a thread the another hinge element is trapped.

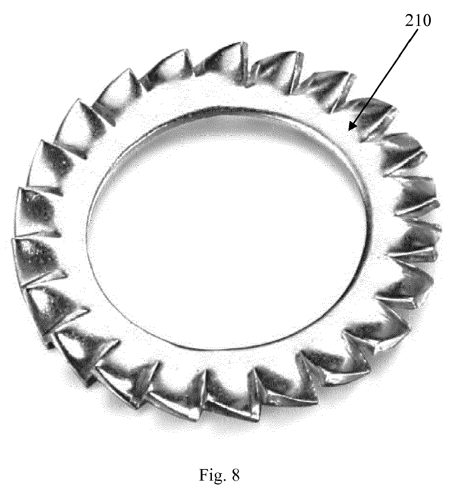

The castellation elements that are shown in figures 6a, 6b, 6c as well as the serration elements that are shown in figures 7a and 7b can be realized by washers such as the washer 210 that is shown in figure 8. However, the skilled person would now that any surface could be employed that ensures adequate friction between two neighboring hinge elements so that they remain clamped in the desired position relative to each other.

The features disclosed in this specification, the claims and the figures maybe important for the claimed invention, taken separately or in any combination, for the respective different embodiments.

### Reference sign list

- 1, 1': side support
- 3: postural support seat
- 5, 5', 5", 5"', 5"", 5""': support element
- 10, 10', 10", 10"': side support
- 30: postural support seat
- 50, 50', 50", 50": support element
- 70, 70', 70": hinge element
- 90: attachment element
- 110a, 110a', 110b, 110b': through hole
- 130a, 130a', 130b, 130b': castellation element
- 150: spring means
- 170a, 170a', 170b, 170b': serration element
- 190, 190': locking pin
- 210: washer

## Claims

1. A side support (10) for a postural support seat (30), comprising:
at least one support element (50) for exerting a force on a user sitting in the postural support seat (30);
at least a first hinge element (70) and at least a second hinge element (70') forming a joint-link chain, wherein the support element (50) is attached to a first end of the joint-link-chain; and
at least one attachment element (90), wherein a second end of the joint-link-chain, being opposite to the first end is connected to the attachment element (90), and wherein the attachment element (90) is adapted to be connected to the postural support seat (30).

2. The side support (10) according to claim 1, **characterized in that** the second hinge element (70') is connected to the support element (50) and/or the first hinge element (70') is connected to the attachment element (90), the first hinge element (70) and/or the second hinge element (70') comprise(s) an essentially elongated shape, and comprise(s) at least two attachment points at opposite ends and/or the support element (50) is at least partly formed and/or comprised by the second hinge element (70') and/or the attachment element (90) is at least partly formed and/or comprised by the first hinge element (50).

3. The side support (10) according to claim 2, **characterized in that** the side support (10) comprises at least one locking pin (190), and wherein the attachment points comprise at least one through hole (110a, 110b) each, suitable for inserting the locking pin (190, 190') for coupling two neighboring first and/or second hinge elements (70, 70') to each other for forming the joint-link chain, wherein the two neighboring first and/or second hinge elements (70, 70') are being at least in part rotational about the locking pin (190, 190').

4. The side support (10) according to claim 3, **characterized in that** the through holes (110a, 110b) are located in respective recesses in the surface of the first hinge element (70) and/or second hinge element (70') so that two neighboring first and/or second hinge elements (70, 70') are aligned with each other, preferably wherein the recesses are located on the same side of the first and/or second hinge elements (70, 70'), or on opposite sides of the first and/or second hinge elements (70, 70').

5. The side support (10) according to claim 3 or 4, **characterized in that** the locking pin (190) and the through holes (110b, 110a') are adapted to form a friction joint, wherein preferably the outside of the locking pin (190) and the inside of the through holes (110b, 110a') each comprise threads.

6. The side support (10) according to claim 3 or 4, **characterized in that** at least one castellation element (130a, 130b) is arranged around each through hole (110a, 110b) at a location where two neighboring first and/or second hinge elements (70, 70') are contacting each other, wherein preferably the castellation element (130b) of the first or second hinge element (70) is adapted to interact with a castellation element (130a') of the neighboring first and/or second hinge element (70'), and wherein especially the locking pin (190) is kept biased by spring means (150) for keeping the castellation elements (130b, 130a') in engagement, preferably wherein the two neighboring first and/or second hinge elements (70, 70') are adapted so that pulling the two neighboring first and/or second hinge elements (70, 70') away from each other disengages the engagement between the hinge elements (70, 70').

7. The side support (10) according to claim 3 or 4, **characterized in that** at least one serration element (170a, 170b) is arranged around each through hole (110a, 110b) at a location where two neighboring first and/or second hinge elements (70, 70') are contacting each other, wherein preferably the serration element (170b) of the first or second hinge element (70) is adapted to interact with the serration element (170a') of the neighboring first and/or second hinge element (70'), and wherein especially the locking pin (190') comprises a thumb screw for keeping the serration elements (170b, 170a') of the hinge elements (70, 70') in engagement.

8. The side support (10) according to one of the preceding claims, **characterized in that** the support element (50) comprises at least one connection element for attaching the support element (50) to the first end of the joint-link-chain, especially the second hinge element (70'), wherein preferably the connection element comprises a hinge coupling for rotationally attaching the support element (50) to the second hinge element (70') in the joint-link-chain, wherein especially the hinge coupling is adapted to allow vertical and/or horizontal rotation of the support element (50) relative to the joint-link-chain.

9. The side support (10) according to one of the preceding claims, **characterized in that** the attachment element (90) is essentially elongated, especially comprises at least one continuous groove running in its longitudinal direction, preferably the attachment element (90) comprises two continuous grooves on opposite sides of the attachment element (90), for installing the attachment element (90) in a rail section that is arranged on a side of a seat section and/or back section of the postural support seat (30), preferably the attachment element (90) is adapted to be slidably installed in the rail section.

10. The side support (10) according to one of the claims 1 to 8, **characterized in that** the attachment element (90) is essentially elongated, especially comprises at least one bracket with at least one continuous protrusion running in its longitudinal direction, preferably the attachment element (90) comprises two continuous protrusions on opposite sides of the attachment element (90), for installing the attachment element (90) in the rail section that is arranged on the side of the seat section and/or back section of the postural support seat (30), preferably the attachment element (90) is adapted to be slidably installed in the rail section.

11. The side support (10) according to one of the preceding claims, **characterized in that** the support element (50) comprises at least one pad for contacting the user's body.

12. The side support (10) according to one of the preceding claims, **characterized in that**
the joint-link chain is comprised of at least a third hinge element (70") located between two first and/or second hinge elements (70, 70'), preferably a plurality of third hinge elements (70").

13. The side support (10) according to one of the preceding claims, **characterized in that**
the first hinge element, the second hinge element and/or the third hinge element (70, 70') comprise(s) at least partly at least one plastic material, and/or at least one cast aluminum material.

14. A postural support seat (30), comprising
at least one rail section arranged along the seat section and/or the back section, and
at least one side support (10) according to any of claims 1 to 13, wherein especially the side support (10) is installed in the rail section.

15. The postural support seat (30) of claim 14, **characterized in that**
first and second rail sections are arranged along the side of the seat section, wherein preferably at least two side supports (10, 10', 10", 10"') are installed as pelvic supports in each of the first and second rail sections; and/or
third and fourth rail sections are arranged along the side of the back section, wherein especially at least one side support is installed as lateral support in each of the third and fourth rail sections.
